(19) Europäisches Patentamt / European Patent Office / Office européen des brevets

(11) **EP 3 361 412 B1**

(12) **EUROPEAN PATENT SPECIFICATION**

(45) Date of publication and mention
of the grant of the patent:
**06.09.2023 Bulletin 2023/36**

(21) Application number: **17155708.5**

(22) Date of filing: **10.02.2017**

(51) International Patent Classification (IPC):
*G06V 20/52* (2022.01)    *G06V 10/82* (2022.01)
*G06V 10/44* (2022.01)    *G06V 10/764* (2022.01)
*G06V 20/56* (2022.01)    *G08G 1/04* (2006.01)
*G08G 1/095* (2006.01)    *G08G 1/0967* (2006.01)

(52) Cooperative Patent Classification (CPC):
**G06V 10/454; G06V 10/764; G06V 10/82;
G06V 20/52; G06V 20/56; G08G 1/04; G08G 1/095;
G08G 1/096716; G08G 1/096741; G08G 1/096775**

(54) **BLACK ICE DETECTION SYSTEM, PROGRAM, AND METHOD**

SCHWARZEISDETEKTIONSSYSTEM, -PROGRAMM UND -VERFAHREN

SYSTÈME, PROGRAMME, ET PROCÉDÉ DE DÉTECTION DE GLACE NOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.08.2018 Bulletin 2018/33**

(73) Proprietor: **FUJITSU LIMITED
Kawasaki-shi Kanagawa 211-8588 (JP)**

(72) Inventor: **VAN DEN BERGHE, Sven
Marlow, Buckinghamshire SL7 3LE (GB)**

(74) Representative: **Haseltine Lake Kempner LLP
Cheapside House
138 Cheapside
London EC2V 6BJ (GB)**

(56) References cited:
WO-A1-2015/034844    US-A1- 2014 062 725
US-B1- 9 465 987

- QIAN YIMING ET AL: "Evaluating features and
classifiers for road weather condition analysis",
2016 IEEE INTERNATIONAL CONFERENCE ON
IMAGE PROCESSING (ICIP), IEEE, 25 September
2016 (2016-09-25), pages 4403-4407,
XP033017329, DOI: 10.1109/ICIP.2016.7533192
[retrieved on 2016-08-03]
- BRANDAO MARTIM ET AL: "Material recognition
CNNs and hierarchical planning for biped robot
locomotion on slippery terrain", 2016 IEEE-RAS
16TH INTERNATIONAL CONFERENCE ON
HUMANOID ROBOTS (HUMANOIDS), IEEE, 15
November 2016 (2016-11-15), pages 81-88,
XP033036061, DOI:
10.1109/HUMANOIDS.2016.7803258 [retrieved on
2016-12-30]
- CIMPOI MIRCEA ET AL: "Deep filter banks for
texture recognition and segmentation", 2015
IEEE CONFERENCE ON COMPUTER VISION AND
PATTERN RECOGNITION (CVPR), IEEE, 7 June
2015 (2015-06-07), pages 3828-3836,
XP032793834, DOI: 10.1109/CVPR.2015.7299007
[retrieved on 2015-10-14]

**EP 3 361 412 B1**

**Description**

## INTRODUCTION

This invention lies in the field of black ice detection. In particular, embodiments relate to image processing of road surface images using a convolutional neural network to detect the presence of black ice.

## BACKGROUND

Road travel safety is highly dependent on weather conditions and, in particular, weather conditions such as ice formation that can cause reduced traction between the road surface and the tyres of a vehicle travelling along the road. These compromised road conditions can be localised and, although the potential for these conditions can be forecast, their realisation depends on the fine details of local weather and road surface conditions and cannot be precisely defined. The sudden and rapid deterioration of weather conditions can often result in drivers being taken by surprise by the onset of potentially dangerous road conditions, such as ice, which can result in road traffic accidents. These accidents could be avoided by providing drivers with timely warnings of an imminent deterioration in weather conditions which could cause hazardous driving conditions.

A number of systems have been proposed to address these problems but they suffer from a number of limitations which restrict their applicability. These limitations include the need for special purpose equipment and so have a high cost of deployment and maintenance. The accuracy of these systems is also limited.

WO 2015/034844 A1 (FLIR SYSTEMS [US]) 12 March 2015 (2015-03-12) discloses techniques which use infrared imaging modules to image and detect phase transitions of water, such as ice formation, in a scene.

US 2014/062725 A1 (MASTON ROBERT A [US]) 6 March 2014 (2014-03-06) relates to monitoring road conditions and, more particularly, to systems and methods of measuring and mapping the temperature of road surfaces.

Black ice, also known as "glare ice" or "clear ice", refers to a thin coating of glazed ice on a surface such as a road. While not truly black, it is substantially transparent, allowing the usually-black asphalt road to be seen through it such that the ice is hardly discernible to a person viewing the roadway. Such black ice is also unusually slippery compared to other forms of ice on roadways making it very dangerous for road vehicles.

In addition, black ice often has a matte appearance rather than the expected gloss appearance of other forms of ice, and is often interleaved with wet pavement which is similar in appearance. For this reason it is especially hazardous when driving as it is both hard to see and extremely slippery. Consequently, regular forward facing vision systems have the same difficulties as human eyes do in detecting black ice.

Black ice formation is a relatively rare event which is most common during colder spells of weather in winter and rarely happens during the remainder of the year. It is therefore difficult to justify the expense of deploying a permanent, wide spread, dedicated black ice monitoring system.

It is desirable to create a system that allows the reliable detection of black ice on road surfaces wherever it may occur in an extensive road network. As the periods in which there is potential for black ice to form are relatively rare the system should not require a dedicated allocation of resources and it is also desirable to reuse existing sensing infrastructure.

## STATEMENTS OF INVENTION

Embodiments include a black ice detection system according to claim 1.

Advantageously, embodiments of the present invention provide a cost-effective, reliable and widespread system for monitoring road surfaces conditions in order to identify black ice by processing samples of road surface images produced by image capturing resources that are already installed for the purposes of performing more general monitoring activities, for example, road traffic cameras, security cameras, or closed-circuit television (CCTV). The processing is performed by a convolutional neural network that has been pre- trained to detect the textures of images that are characteristic of black ice. The processing occurs automatically and if dangerous conditions are detected an alert is raised.

Advantageously, sufficient illumination for capturing road surface images may be provided by natural daylight or by street lighting depending on the time of day, time of year, and other environmental conditions such as weather and moonlight. The image capturing resources may also rely on illumination from headlamps of vehicles travelling along the road surface being captured. Therefore, embodiments are not reliant upon provision of dedicated additional lighting in order for an existing network of image capturing resources to capture the road surface images.

Using image texture to identify transient black ice provides a consistent representation of road surface conditions for different observing conditions. It is therefore possible to identify black ice being present on a road surface regardless of the orientation of the road surface with respect to the observation point or the light conditions of the surrounding area, which may otherwise obscure the detection of black ice.

A further advantage of embodiments is provided by the utilisation of pre-installed image capturing resources such that it is not necessary to install new or dedicated image capturing resources to exploit this invention, as existing data that is already being collected for a variety of other purposes may be re-used. In other words, embodiments embellish existing camera networks; there is no dependence on new image capturing resources.

Employment of a convolutional neural network has the additional advantage of allowing the black ice detection system to be automatically adapted for compatibility with different camera types and methods of cameras installation.

The black ice detection system may be deployed on demand and is not required to be permanently on-line. Therefore, since the black ice detection can be activated intermittently depending on road surface environment conditions, embodiments may be used episodically, as needed, and thereby provide an efficient means of black ice detection.

In an embodiment which is not according to the invention and is present for illustration purposes only, the image capturing resources may be a road side camera, combined with a sampler, for duplicating subsets of the camera images and sending them to the processor. Alternatively, the image capturing resources may comprise wireless access to computer resources containing on demand images.

In particular, alert recipients may be authorised users of the black ice detection system, wherein authorisation is by, for example, a party responsible for operation of the black ice detection system. Authorised users may be relevant authorities who handle the alerts based on policies or individual users who register to the alerts as a services.

The convolutional neural networks (CNN) may be feedforward artificial neural network image recognition technology variant of a Multilayer Perceptron (MLP) technology.

There are a number of related techniques that can be applied in this system in a similar way which all characterise the texture of an input image as a vector of numbers.

Advantageously, the black ice detection system can also be applied to pedestrian situations where there may be a risk of slipping and falling due to black ice on formation on pavements. In this case the image capturing resources may be CCTV cameras installed in public places for the purpose of monitoring behaviour. Warning systems could also be attached to local street furniture or sent to mobile phone applications in order to provide information regarding the location of the formation of black ice.

By utilising existing camera installations and on-demand cloud or edge computing, the black ice detection system has low dedicated infrastructure requirements which results in expanded area coverage of black ice detection and therefore reduced risk of road traffic accidents and increased safety benefits.

Defined above are conditions to be satisfied to switch from a non-alert state to an alert state. The conditions are: the real-time road surface texture value vector exhibiting similarity to the exemplar black ice road surface value vector that is above a threshold (the threshold being a predefined property of the system), and a predetermined number (for example, 2 or 3) of successive real-time road surface texture value vectors for the physical road surface in question exhibit an increasing similarity to the exemplar black ice road surface value vector and decreasing similarity to the exemplar clear road surface value vector. Unless those two conditions are satisfied, the processor remains in a non-alert state, which can be considered a default state since black ice is an episodic phenomenon.

Once in an alert state, conditions must be satisfied for a switch from the alert state back to the non-alert state: when the comparison indicates a similarity threshold between the real-time road surface texture value vector and the exemplar black ice road surface texture value is not satisfied, switching from an alert state to a non-alert state if, over a predetermined number of road surface images in the time series, the respective real time road surface value vectors exhibit decreasing similarity to the exemplar black ice road surface value vector and increasing similarity to the exemplar clear road surface value vector.

Optionally, embodiments further comprise: a road surface environment monitor configured to monitor environment conditions at the physical road surface imaged in a road surface image retrieved by the processor, specify road surface environment information, wherein the road surface environment information indicates when the physical road surface is susceptible to black ice formation, based on the monitored environment conditions, and when the road surface environment information indicates that the physical road surface is susceptible to black ice formation, to issue a request to the processor. The processor, in response to the request, being configured to retrieve a time series of images of the physical road surface from the image capturing resources.

In an embodiment which is not according to the invention and is present for illustration purposes only, the road surface environment monitor may be a manual process, where an ice detection state of the processor is manually initiated or triggered. According to the invention, the road surface environment monitor is an automatic process which receives and processes road surface environment information directly. In the case where on demand image sources are used instead of dedicated road traffic cameras, the road surface environment monitor may control the processor only.

The image capturing resources may be a network of image capturing resources which are linked so as to communicate with each other as well as the processor. Alternatively, the image capturing resources may be a collection of independent image capturing resources each of which communicate with the processor independently.

Advantageously, the road surface environment monitor is able to identify the specific road surface environment conditions which trigger activation of the black ice detection system. Therefore, the black ice detection system is only activated when the road surface environment monitor issues a request to the processor. As a result, operating costs are reduced in comparison to a system which is required to be permanently operational.

The issue request may be via wireless communication between a transmission station of the road surface environment monitor and a receiving station of the processor. Alternatively, the issue request may be communicated via personnel operating the road surface environment monitor.

Environment conditions in the context of road surface environment monitor can be, for example, meteorological conditions at a region including the road surface.

Furthermore, the road surface environment monitor further includes a weather forecast receiver configured to receive a time series of weather forecasts for a region covering the physical road surface imaged in the road surface image, and update the road surface environment information according to the most recently received weather forecast among the time series.

The weather forecast received by the weather forecast receiver may include values representing one or more from among the temperature, barometric pressure, humidity, wind speed, wind direction and precipitation quantity of the region covering the physical road surface imaged in the road surface image. The weather forecast may also be referred to as a meteorological forecast. As an example, the weather forecast may be a single value indicating the likelihood of black ice formation over a time period covered by the weather forecast. Alternatively, the weather forecast may be received by the weather forecast receiver in a native format (including values representing plural meteorological conditions at a location including the road surface) and be converted into a single value indicating the likelihood of black ice formation over a time period covered by the weather forecast by the weather forecast receiver.

The weather forecast receiver may also contain a database of previously received road surface environment information from previous weather forecasts for each individual physical road surface region. Advantageously, the road surface environment monitor may use previous road surface environment information, in combination with the most recently received road surface environment information, when determining whether or not to issue a request to the processor.

Optionally, the road surface environment monitor further includes a temperature sensor configured to generate temperature information for a region covering the physical road surface imaged in the time series of road surface images, and update the road surface environment information according to the most recently generated temperature information.

The temperature sensor may be a thermometer, a thermocouple, a thermistor, a resistance temperature detector, a pyrometer, Langmuir probes or infrared technology.

The temperature sensor may communicate the temperature information to the processor via wireless communication between a transmission station of the temperature sensor and a receiving station of the processor. Advantageously, by communicating the temperature information wirelessly to the processor, the temperature sensor may be situated at the specific location of the road surface being imaged by the image capturing resource, without the road surface environment monitor needing to be at the road surface.

Temperature is a useful discriminator for determining when to process images for black ice detection and when no such detection is required. Black ice forms at road surface temperatures at or below the freezing point of water, so accurately measuring road surface temperature provides information to be used in determining when to initiate the black ice detection image processing functionality of embodiments. For example, a threshold road surface temperature may be defined above which no black ice detection image processing is performed.

Optionally, the image capturing resources are an existing network of cameras configured to communicate with the processor, and the processor is further configured to sample images from the existing network of cameras as road surface images.

The existing network of cameras may include one or more from among: traffic enforcement cameras, red light running cameras, road safety cameras, photo radar, speed cameras, safety cameras, bus lane cameras, road junction monitoring cameras, parking cameras and CCTV cameras.

The image capturing resources may communicate with the processor via wireless communication between a transmission station of the image capturing resources and a receiving station of the processor. Alternatively, the images being captured by the image capturing resources may be compiled into a third party database which is subsequently accessed by the processor.

The processor may be located at the same location as the image capturing resource.

Alternatively, the processor may be located at a centralised location between plural image capturing resources. Advantageously, by locating the processor at a centralised location, the processor may be instructed to carry out sampling on more than one image capturing resource, and thereby the number of processors required to execute the black ice detection system may be reduced.

The image capturing resources are on demand image capturing infrastructure, connectable to the black ice detection system over a network, that is arranged to image the road surface in response to a demand from the black ice detection system.

The on demand image capturing infrastructure can be mobile, such as an imaging drone, and transportable to the vicinity of the road surface for imaging the road surface in response to a demand from the black ice detection system. The on demand image capturing infrastructure may be fixed in location, but have a movable field of view, which movable field of view can be arranged to include the road surface in response to the demand.

The demand is automated and is generated in response to the road surface environment monitor receiving road surface environment information indicating that a likelihood of black ice formation is above a predefined threshold value.

The demand may be relayed as a message to the party responsible for the on demand image capturing infrastructure on behalf of the black ice detection system.

The on demand image capturing infrastructure may be connected to the black ice detection system over Wi-Fi, or alternatively using Mobile Edge Technology so that the processing of images is brought closer to the image source. Advantageously, by reducing the transmission distance between the on demand image capturing infrastructure and the processor, the overall efficiency and reliability of the black ice system is improved.

Embodiments may also include the processor being configured to initialise for performing image processing on a time series of road surface images from particular image capturing resources by: transforming each of plural regions of a reference image from the particular image capturing resources into a reference texture value vector using the convolutional neural network; for a plurality of image condition groups, each containing images obtained under a particular imaging condition and comprising one or more images of a clear road surface, and one or more images of a black ice road surface, determining an exemplar clear road surface texture value vector by inputting the one or more images of the clear road surface to the convolutional neural network, and determining an exemplar black ice road surface texture value vector by inputting the one or more images of the black ice road surface to the convolutional neural network, the determined value vectors being recorded as an exemplar road surface texture value pair for the respective image condition group; wherein each of the image condition groups consists of images obtained under a particular imaging condition; wherein for each of the portions of the reference road surface image, the presence or otherwise of road surfaces is identified by comparing the reference texture value vector for the portion and the exemplar clear road surface texture value from the exemplar road surface texture value pair. The portions of the reference road surface image for the particular image capturing resources identified as having road surface present are recorded, and, during image processing of images from the particular image capturing resources, transforming the image of the physical road surface in the real time road surface image into a real time road surface texture value vector by referring to the recorded portions.

The black ice detection system may be initiated before the formation of black ice in order to obtain an un-iced image of the current road surface.

A clear road surface is a road surface with no black ice formation on its surface and a black ice road surface is a road surface where black ice has formed on its surface.

A reference road surface image is an image taken by the image capturing resource at a point in time at which no black ice is present on the road surface. The reference image is then processed by a detection algorithm of the processor during the initialisation process to identify the specific portions of the reference road surface image which have road surface present, these portions may be for example a 16 by 16 grid of sub images. By identifying which portions of the reference road surface image have road surface present and disregarding potions of the reference road surface image which have other features present, for example grass, the amount of processing which is subsequently carried out by the processor is reduced. Furthermore, the accuracy of black ice detection is increased as the processing is focussed on just those areas where black ice risk is significant.

By updating the reference road surface image periodically, the processor is able to reconfigure the black ice detection system to take into account any movement that may have occurred to the image capturing resources during the period since the black ice detection system was last used. Since any movement in the exact position of the image capturing resources could cause the road surface position to change, from the reference point of the image capturing resource, the processor may be instructed to update the reference road surface image periodically to re-locate the portions of the images having road surface present. Advantageously, by periodically updating the reference image to ensure that only the portions of an image which has road surface present is being processed by the processor, the overall efficiency of the black ice detection system is improved.

The reference texture value vector is determined using a convolutional neural network whereby the convolutional neural network takes the reference road surface image as an input and produces a reference road surface texture value vector as an output.

Each image condition group contains images which have matching values of one or more image condition characteristics, for example, image distortion, image noise, signal artefacts. The image condition groups may also be arranged based on the effects produced by different camera models or the light conditions due to the photo being taken at a particular time of day affecting the visibility and illumination of the photo. The images contained in each image condition group may be sourced from an existing database of road surface images or compiled by the black ice detection system itself over time. Each image condition group contains both clear road surface images and black ice road surface images.

The exemplar clear road surface texture value vectors and exemplar black ice road surface texture value vectors are generated by inputting clear road surface images and black ice road surface images into the pre-trained convolutional neural network, which generates exemplar clear road surface texture value vectors and exemplar black ice road surface texture value vectors as an output of vectors of numbers to be used as reference models.

The exemplar road surface texture value vector pair is created by identifying an exemplar clear road surface texture value vector and an exemplar black ice road surface texture value vector which are generated from images in a single image condition group. Advantageously, by ensuring the exemplar texture value vectors have been derived from images having the same image condition characteristics, the processor is able to obtain values of imaging characteristics for real time images, match them to values of imaging characteristics characterising a particular imaging condition group, and compare a road surface texture value vector generated by inputting the real time image to the convolutional neural network with the road surface texture value vector pair for the matched imaging condition group.

The real time road surface image is the most recently obtained road surface image that has been obtained by the image capturing resource for a particular portion of road surface. Real time road surface texture value vectors are subsequently generated for each identified portion of the real time image having road surface present using the convolutional neural network and are stored as a vector of numbers. Each real time road surface texture value vector is compared against each texture value vector from the exemplar road surface texture value vector pair in order to determine whether or not black ice is forming on the road surface.

Furthermore, in the image processing, the presence or absence of black ice is determined in an iterative process by: determining a first correlation value by comparing the real time road surface texture value vector to the exemplar black ice road surface texture value vector from the exemplar road surface texture value pair; determining a second correlation value by comparing the same real time road surface texture value vector as used in determining the first correlation value to the reference road surface texture value vector; and determining first correlation values and second correlation values for a time series of real time road surface images retrieved by the processor from the same image capturing resources and determining whether black ice is present based on whether the first correlation values and second correlation values increase or decrease over the time series of real time road surface images.

The first correlation value is the difference between the real time road surface texture value vector and the exemplar black ice road surface texture value vector. The second correlation value is the difference between the same real time road surface texture value vector and the reference road surface texture value vector. The difference operator is, for example, the Euclidean norm. The difference operator may also be multiplied by an arbitrary constant which represents various values but remains unchanged by the changes in the difference operator.

Where the resulting calculation produced by the first correlation value is small, there is a greater likelihood that the real time road surface texture value vector has the same texture as the exemplar black ice road surface texture value vector, and hence the likelihood of black ice forming on the surface of the road surface is increased.

Where the resulting calculation produced by the second calculation value is small, there is a greater likelihood that the real time road surface texture value vector has the same texture as the reference road surface texture value vector, and hence the likelihood of black ice forming on the surface of the road is decreased.

The time series of real time road surface images may be a series of successive real time road surface images obtained from the image capturing resources. The determination of whether black ice has formed on the road surface image may be based on the first coefficient decreasing over a predetermined number of successive real time road surface images and/or the second coefficient increasing over a predetermined number of successive real time road surface images, in an iterative process. The determination of whether black ice is dissipating from the road surface may be based on the first coefficient increasing over a predetermined number of successive real time road surface images and/or the second coefficient decreasing over a predetermined number of successive real time road surface images, in an iterative process.

There may also be a predetermined similarity threshold value of which the first correlation value must pass in order for the processor to generate a black ice alert. The predetermined similarity threshold value may be set by the authorised user or may be automatically set based on historic road surface environment information received by the road surface environment monitor.

Embodiments may also include the processor being further configured to: receive road surface environment information from the road surface environment monitor, and to determine whether an active detection state or a dormant state is entered based on the road surface environment information, wherein the active detection state determines the presence or absence of black ice on road surfaces, and wherein power consumption of the system is reduced in the dormant state compared with the active detection state.

The active state may cause the processor to initialise and/or respond to the retrieval of a road surface image by executing image processing on the retrieved road surface image.

The active state may be entered when the road surface environment monitor receives road surface environment information indicating that the physical road surface is susceptible to black ice formation, and the road surface environment monitor sends road surface environment information to the processor indicating that the physical road surface is susceptible to black ice formation.

The dormant state may cause the processor to enter a dormant state in which no initialisation takes place and/or no response to the retrieval of a road surface image by executing image processing on the retrieved road surface image takes place.

The dormant state may be entered when the image processing process determines that black ice is dissipating based on the first coefficient increasing over a predetermined number of successive real time road surface images and/or the second coefficient decreasing over a predetermined number of successive real time road surface images, in an iterative process. Advantageously, by providing a dormant state, the black ice detection system is able to improve efficiency and reduce operating costs in circumstances where black ice is unlikely to occur, for example, during summer time months.

Optionally, the processor is further configured to transmit the black ice alerts as messages to roadside displays, text messages to registered users and as overlays to travel routing applications.

The black ice alerts may also be sent to, for example, satellite navigation systems, smartphone map applications, subscription road traffic alert systems and road traffic management systems.

Advantageously, the alert management system of the black ice detection system provides a means for notifying users, either directly to their mobile devices or indirectly via roadside displays, as to the possibility of black ice formation on roads in the locality of the user. Consequently, the black ice detection system may reduce the likelihood of road accidents occurring as a consequence of drivers being unaware of black ice on roads.

Embodiments may also include a roadside display configured to receive black ice alerts from the processor, wherein the roadside display is located at the side of the physical road surface in such a manner as to display the black ice alerts received from the processor to drivers using the physical road surface.

Embodiments of another aspect include a black ice detection method according to claim 11.

Embodiments of another aspect include a computer program according to claim 12.

Embodiments of another aspect include a computer readable medium storing said computer program.

## DETAILED DESCRIPTION

Embodiments will now be described with reference to the accompanying drawings, in which:

Figure 1 is a schematic diagram of a black ice detection system;
Figure 2 is a schematic diagram of a black ice detection system including an initialisation unit;
Figure 3 is a schematic diagram of an existing system for the manual monitoring of road traffic conditions;
Figure 4, which is not according to the invention and is present for illustration purposes only, is a schematic diagram of a particular embodiment of a black ice detection system including a sampling unit;
Figure 5 is a schematic diagram of a particular embodiment of a black ice detection system not including a sampling unit;
Figure 6 is a flowchart outlining the process of a detection unit detecting black ice formation on a road surface; and
Figure 7 is a hardware architecture of an embodiment.

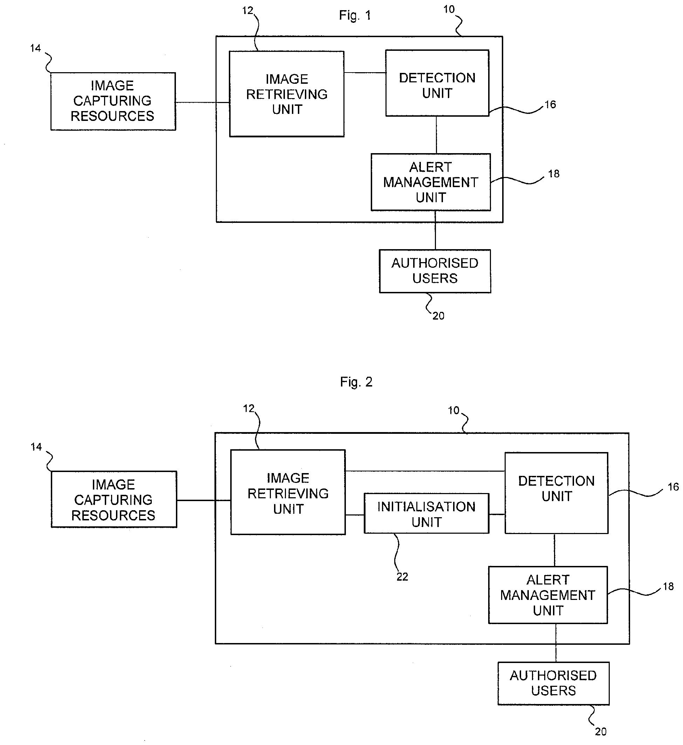

Figure 1 illustrates a black ice detection system 10. The system 10 is a memory coupled to a processor, the memory storing processing instructions which when executed by the processor causes the processor to carry out the functions of the following functional units: an image retrieving unit 12, a detection unit 16 and an alert management unit 18. The lines between the units represent the sharing of information between the functional units, noting that such information may be stored by the memory during execution. Other exchanges of data beyond those illustrated may also occur, the illustration represents specific data exchanges, as detailed below.

The image retrieving unit 12 is configured to retrieve the road surface image from image capturing resources 14, wherein the road surface image includes the image of a physical road surface.

The image retrieving unit 12 can be implemented as a software module executed by a processor using memory and I/O hardware. The road surface images may be transferred to the image retrieving unit 12 over a network from the image capturing resources 14 as they are captured by the image capturing resources 14, or the road surface images may be stored in each individual image capturing resource independently until a signal is received from the image retrieving unit 12 indicating that the road surface image is ready to be sent, at which point the road surface images are sent to the image retrieving unit 12. Alternatively, the road surface images may be sent to and stored in a third party location by the image capturing resources 14 from which the image retrieving unit 12 may retrieve the images. Upon receipt of the road surface images, the image retrieving unit 12 may store the road surface images in a dedicated memory location on a computing environment that is accessible to the black ice detection system 10. Alternatively, the road surface images may be received by the image retrieving unit 12 sequentially, such that each road surface image is stored temporarily in the dedicated memory location before being forwarded to the detection unit 16.

The road surface images being captured by the image capturing resources 14 may be captured at a predetermined frequency of time intervals. For example, upon activation of the black ice detection system 10, the image capturing resource 14 may capture road surface images at a frequency of every 5 seconds, every 5 minutes or every 5 hours. Alternatively, the image capturing resource 12 may be configured to capture a road surface video stream for predetermined bursts of time at a predetermined frequency. For example, the road surface video stream may be for a burst of 10 seconds at a frequency of every 2 minutes. The video stream may subsequently be transformed into a sequence of images by the sampling unit of the black ice detection unit.

After the retrieval by the image retrieving unit 12, the road surface images may be transmitted to the detection unit 16 in the form of video stream, individual images or groups of image via a third party storage location.

The image retrieving unit 12 is a functional unit that may comprise a processor executing processing instructions stored on a memory, said instructions causing the processor to retrieve road surface images from image capturing resources 14.

The texture characterisation of road surfaces may be determined using a convolutional neural network, such as the VGG-19 network, which has been pre-trained to recognise various types of road surface textures that may exist in different weather conditions. The accuracy of texture characterisation may be improved by repeating this training process using a number of different input image sets that have themselves been placed into image condition groups based on the conditions under which the images were created, such as use of different camera models, different camera types (e.g. monochrome or colour), time of day (e.g. day, night, dusk or twilight), visibility and illumination (e.g. from the angle of the sun). The resulting outputs produced by the convolutional neural network are in the form of exemplar road surface texture value vectors, where each vector comprises one or more values which represent the texture of a road surface.

The exemplar road surface texture value vectors are subsequently arranged into exemplar clear road surface texture value vectors and exemplar black ice road surface texture value vectors by the black ice detection system 10. Exemplar road surface texture value pairs are then created based on the image condition group from which the exemplar clear road surface texture value vectors and exemplar black ice road surface texture value vectors were derived. For example, if the black ice detection unit 10 requires the particular exemplar road surface texture value pair to be derived from images having low light conditions, the detection unit 16 would identify the exemplar clear road surface texture value vector which has been derived from the clear road surface images in the "low light" image condition group and also identify the exemplar black ice road surface texture value vector which has been derived from the black ice road surface images in the same group. The resulting vector pair represents the texture of the clear physical road surface and the texture of the physical road surface having black ice formation which have both been derived from images with the same or similar image conditions (that is, imaging conditions characterised in the same way based on values of one or more imaging condition characteristics).

The detection unit 16 is configured to respond to the retrieval of road surface images by the image retrieving unit 12 by executing image processing on the retrieved road surface image as a real time road surface image, the image processing comprising: transforming the image of the physical road surface in the real time road surface image into a real time road surface texture value vector using the convolutional neural network trained to transform images of surfaces into value vectors representing said surfaces, identifying when black ice is present on the physical road surface included in the real time road surface image by comparing the real time road surface texture value vector to the exemplar road surface texture value vectors produced by inputting images of road surfaces on which black ice is formed to the convolutional neural network.

The detection unit 16 may be in the same location as the image retrieving unit 12 thereby allowing the road surface images to be transmitted over wired communication. Alternatively, the road surface images may be transmitted using a wireless network thereby allowing the detection unit 16 to be located in a different location to the image retrieving unit 12.

Upon receipt of the road surface images, the detection unit 16 identifies the road surface image as the real time road surface image and proceeds with processing of the real time road surface image. Processing of real time road surface image involves identifying the areas of the real time road surface image having physical road surface present, which may be facilitated by the initialisation unit 22 as discussed below in relation to Fig. 2. After being identified, each part of the image having a physical road surface present is subsequently transformed into a real time road surface texture value vector, which characterises the texture of the physical road surface. The transformation may be carried out using the convolutional neural network.

The detection unit 16 then begins the process of determining whether black ice formation is likely on the physical road surface represented by the real time road surface texture value vector. This process begins by the detection unit 16 identifying the image condition of the particular image from which the real time road surface texture value vector was transformed. Once the image condition is identified, the appropriate exemplar road surface texture value pair for the image condition group which matches, or is most similar, to the image condition of that particular image is selected. Two comparisons are then made, the first comparison is made between the real time road surface texture value vector and the exemplar black ice road surface texture value vector from the selected exemplar road surface texture value pair, wherein the comparison result is in the form of a first correlation value. The second comparison is made between the real time road surface texture value vector and a reference road surface texture value vector, which may be acquired by the initialisation unit 22 as discussed in relation to Fig. 2 below, wherein the comparison result is in the form of a second correlation value. These two correlation values are subsequently analysed by the detection unit 16 in order to determine whether a similarity threshold has been exceeded, wherein the similarity threshold is set to indicate that there is a sufficiently high likelihood of black ice forming on the physical road surface represented by the real time road surface texture value vector. In the case where the detection unit 16 determines that the similarity threshold has been exceeded, the detection unit generates a black ice alert (i.e. switches from a non-alert state to an alert state) if successive images show increasing similarity to the exemplar black ice road surface value vector and decreasing similarity to the exemplar clear road surface value vector.

Once in an alert state, two conditions must be satisfied for a switch from the alert state back to the non-alert state: when the comparison indicates a similarity threshold between the real-time road surface texture value vector and the exemplar black ice road surface texture value is not satisfied, switching from an alert state to a non-alert state if, over a predetermined number of road surface images in the time series, the respective real time road surface value vectors exhibit decreasing similarity to the exemplar black ice road surface value vector and increasing similarity to the exemplar clear road surface value vector.

In one particular embodiment of the black ice detection system 10, the analysis performed on the two correlation values may include determining a first correlation value and a second correlation value for a time series of real time road surface images retrieved by the image retrieving unit from the same image capturing resources. The time series is a series of images of the same physical road surface from the same image capturing resource, with consecutive images in the series separated in time. The temporal separation may be a predetermined fixed value of a number of seconds, for example, 10 seconds or 10 minutes. Alternatively, the period may fluctuate. For example, the images may be triggered by an event, such as a traffic event (a road vehicle present at a particular location or travelling at above a threshold speed) or an environmental event (temperature below a threshold value). Each correlation value for each real time road surface image of the series of real time road surface images may then be analysed to determine whether they are increasing or decreasing over a number of consecutive images in the time series. For example, if the first correlation value, indicating the similarity between the real time road surface texture value vector and the exemplar black ice road surface texture value vector, is increasing and/or the second correlation value, indicating the similarity between the real time road surface texture value vector and the reference road surface texture value vector, is decreasing, the detection unit 16 may generate the black ice alert. However, if the first correlation value is decreasing and/or the second correlation value is increasing, the detection unit 16 may generate an alert indicating that black ice is dissipating. The number of real time road surface images analysed in the time series may be set to a predetermined number. Consequently, a black ice alert may only be generated when the number of consecutively increasing and/or decreasing correlation values exceeds this predetermined number. The use of such a predetermined number serves as a mechanism to reduce false alerts.

For example, a black ice alert may be generated in the following case, where smaller correlation values indicate a greater similarity, as follows:

$$C_{x\text{-}bi/r} = A^* \,|T_x - T_{bi/r}|$$

where:

$C_{x\text{-}bi/r}$ represents the first or second correlation value.
'A' represents an arbitrary constant.
$T_x$ represents a particular real time road surface texture value vector.
$T_{bi/r}$ represents either a particular exemplar black ice road surface texture value vector or a particular reference road surface texture value vector.
$|T_x - T_{bi/r}|$ represents the difference between the particular real time road surface texture value vector and the particular exemplar black ice road surface texture value vector or reference road surface texture value vector, which may be calculated using the Euclidean norm. The suffix "x" represents real time and the suffix "bi/r" represents black ice reference, so the combined suffice "x-bi/r" means that the quantity represents a comparison or aggregation of real time and black ice reference information.

The following mathematical explanation is provided to illustrate the above description of how the black ice alert is generated based on whether each correlation value for each real time surface image is increasing or decreasing over the number of consecutive images in the time series:

$$C_{a\text{-}bi} > C_{b\text{-}bi} > C_{c\text{-}bi}$$

AND

$$C_{a\text{-}r} < C_{b\text{-}r} < C_{c\text{-}r}$$

AND

$$C_{c\text{-}bi} < \text{Predetermined Threshold}$$

where:

$C_{x\text{-}bi}$ represents the first correlation value for a particular real time road surface texture value vector and a particular exemplar black ice road surface texture value vector.

$C_{x\text{-}r}$ represents the second correlation value for a particular real time road surface texture value vector and a particular reference road surface texture value vector.

'Predetermined Threshold' represents the predetermined threshold which may be exceeded in order for the detection unit to generate a black ice alert.

Upon creation of the black ice alert, the detection system may transmit the black ice alert to the alert management unit.

The processing performed by the detection unit 16 can be implemented as a plurality of processors, including but not limited to one or more central processors (CPUs). The memory may comprise a non-volatile storage unit such as Erasable Electronic Programmable Read Only Memory (EEPROM) or a volatile storage unit such as random access memory (RAM).

Since the occurrence of black ice is episodic, the efficiency of the black ice detection system 10 may be optimised by using on demand computing resources through a cloud service, rather than a dedicated system of computer hardware resources.

The alert management unit 18 is configured to receive black ice alerts from the detection unit 16 and transmit the black ice alerts to alert recipients 20 of the black ice detection system 10.

The black ice alert may be transmitted over a network from the detection unit 16 to the alert management unit 18. The alert management unit 18 may store the black ice alert in a dedicated memory location on a computing environment that is accessible to the black ice detection system 10. By storing the black ice alert in a dedicated memory, the alert recipients 20 have the option of monitoring the alert management unit 18 itself in order to identify the presence of the black ice alert, rather than the black ice alert being sent directly to them. Alternatively, the black ice alert may be received by the alert management unit 18 and stored temporarily in the dedicated memory location before being forwarded directly to the alert recipient 20.

The black ice alert may be in the form of a digital message which is subsequently processed by computing hardware of the authorised user 20, such as in-vehicle computing hardware. The black ice alert may also be a linguistic text message including wording to indicate the presence of black ice sent to a user equipment in a telecommunications system.

The alert management unit 18 is a functional unit that may comprise a processor executing processing instructions stored on a memory, said instructions causing the processor to receive a black ice alert from the detection unit 16, and either store the black ice alert in a dedicated memory or transmit the black ice alert to the alert recipient 20.

Figure 2 illustrates one particular embodiment of the black ice detection system 10 in which an initialisation unit 22 is implemented in order to identify portions of road surface images having physical road surface present. The initialisation unit 22 also serves the purpose of ensuring that the viewing angles of the image capturing resources 14 are correctly aligned with the physical road surfaces of which they are capturing images. Since the occurrence of black ice is episodic, it is possible that one or more of the image capturing resources 14 may have been moved or damaged during the period in which the black ice detection system 10 was last used. Therefore, the initialisation unit ensures that the image capturing resources are functioning correctly before the black ice detection system 10 is fully executed.

The initialisation process involves acquiring the reference road surface image from the image capturing resources 14, dividing the reference road surface image into a plurality of subimages and processing each sub-image individually to identify portions of the reference road surface image having physical road surface present. The convolutional neural network is used to transform the reference road surface image into a reference texture value vector for each individual sub-image. The reference road surface image may be an image of the physical road surface being viewed by the image capturing resource 14 which was retrieved by the image retrieving unit 12 in the hours or days preceding activation of the detection unit 16.

The reference texture value vector for each individual sub-image is then compared against the exemplar clear road surface value vector from the exemplar road surface texture value pair in order to determine the similarity between the two. If the comparison produces a high similarity (i.e. a value generated by a distance comparison between the two value vectors is below a predefined threshold value) between the reference texture value vector and the exemplar clear read surface value vector, the initialisation unit 22 determines that there is a physical road surface within the viewing angle of the particular image capturing resource, and that particular image capturing resource may be included in the execution of the black ice detection system 10.

The portions of the reference road surface image having physical road surface present may be recorded by the initialisation unit 22 and sent to the detection unit 16. By providing this information to the detection unit 16, the detection unit 16 is able to transform images of the physical road surface in the real time road surface image into the real time road surface texture value by referring to the portions of the image recorded by the initialisation unit 22. Portions of the reference road surface image not having physical road surface present may be excluded from further processing thereby ensuring that processing is only carried out on portions of the reference road surface image having physical road surface present.

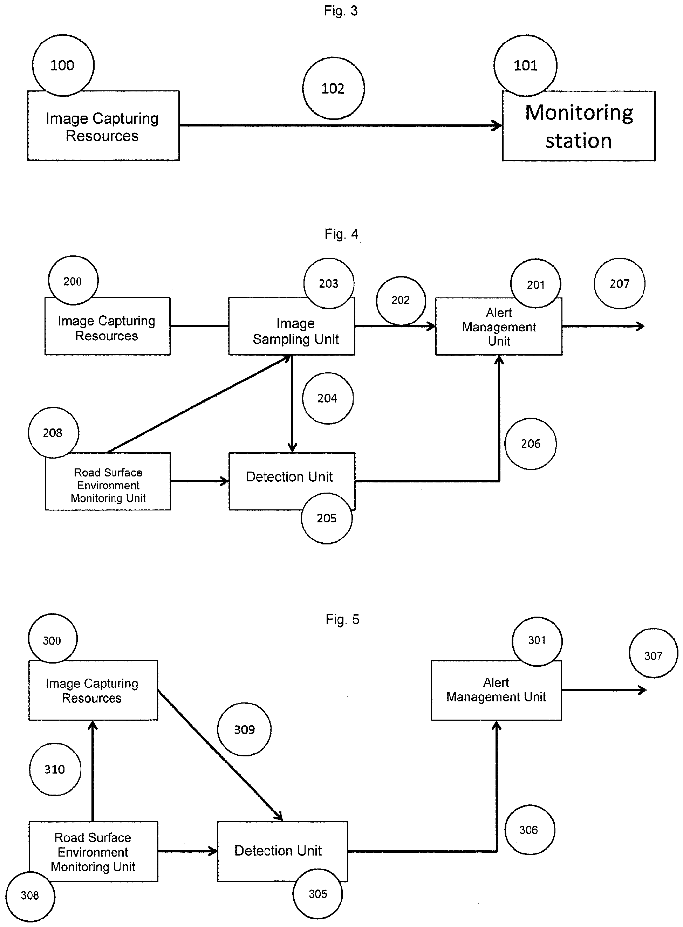

Figure 3 illustrates an existing system for the manual monitoring of road traffic conditions to which the black ice detection system 10 may be delivered as an additional capacity. The system of Figure 3 illustrates the existing network of image capturing resources 100 and a monitoring station 101. The communication line 102 between the units represent the ability of the image capturing resources 100 to transmit road surface images to the monitoring station 101. In this specific embodiment, the monitoring station 101 may serve the purpose of processing road surface images, or transmitting the road surface images captured by the image capturing resources 100 on to the third parties for further processing. In the existing system of Figure 3, parties with an interest in the road surface condition (represented by alert recipients and authorised users in embodiments), must establish communication with the monitoring station 101 or third parties to obtain road surface condition information.

Figure 4 illustrates an embodiment retrofitted into the existing system for the manual monitoring of road traffic conditions, from Figure 3, wherein the image sampling unit 203, the road surface environment monitoring unit 208 and the detection unit 205 have been retrofitted to the existing system. The sampling unit 203 may be located on the communication line 202 between the image capturing resources 200 and the alert management unit 201, wherein the image sampling unit 203 retrieves sample road surface images from the existing network of image capturing resources as road surface images and duplicates a subset of the sampled road surface images to the detection unit 205 via a second communication line 204. Upon receipt of the sampled images from the image sampling unit 203, the detection unit 205 may be configured to execute image processing as discussed previously and thereby identify the formation of black ice on a road surface image. Where the detection unit 205 determines that black ice is present on a road surface, the detection unit 205 may send a black ice alert 206 to the alert management unit 201. The black ice alert may be forwarded to external entities 207 for handling in an appropriate manner according to the situation, such as messages on roadside displays, text messages to registered users or as overlays to travel routing applications, e.g. SatNavs, smartphone map applications etc.

Since the need for black ice detection is episodic the black ice detection system 10 may include a weather condition monitoring module such as the road surface environment monitoring unit 208 illustrated in Figure 4. The road surface environment monitoring unit 208 may be used to conserve resources by ensuring that the black ice detection system 10 is only activated when certain criteria are met, i.e. when road surface temperature is likely to fall to near or below 0°C, and deactivating the black ice detection system 10 when conditions permit, e.g. when the road surface temperature increases to above 0°C. The road surface environment monitoring unit may receive information from a number of sources including: external weather forecasting services and sensing equipment installed locally.

The table below sets out example messages that may be received by the road surface environment monitoring unit by the weather forecast receiving unit, the temperature sensing unit or the detection unit, and the actions taken as a consequence.

| Message | Source of message | Action(s) |
|---|---|---|
| Black ice conditions soon | Weather forecast receiving unit or temperature sensing unit (e.g. forecast) | 1) Begin configuration of detection unit<br>2) Start image sampling |

(continued)

| Message | Source of message | Action(s) |
| --- | --- | --- |
| Black ice conditions imminent | Weather forecast receiving unit or temperature sensing unit (e.g. forecast) | 1) Start image sampling<br>2) Send start message to detection unit |
| Black ice conditions passed | Weather forecast receiving unit or temperature sensing unit (e.g. forecast) | 1) Stop image sampling<br>2) Send stop message to detection unit |
| Configuration complete | Detection unit | Stop image sampling |

Figure 5 illustrates another embodiment of the black ice detection system 10 which enables the user to use on demand image sources as the image capturing resources 300. In this particular embodiment, the on demand images may be acquired by cameras that are not dedicated to road traffic monitoring. Access to the on demand images being captured by such image capturing resources 300 may therefore require authorisation by the relevant party before the road surface images may be processed by the black ice detection system 10. By utilising on demand images, the black ice detection system does not require an image sampling unit, as described in relation to the embodiment of Figure 4, and instead is able to transmit the physical road surface images directly to the detection unit 305 via communication line 309.The road surface environment monitoring unit 308 may be used to initiate and terminate the transmission of on demand images directly to the detection unit 305 via communication link 310.

The image capturing resources 300 may be equipped with public network connectivity (e.g. mobile or Wi-Fi) thereby enabling the on demand images to be transmitted wirelessly to the detection unit 305. However, the use of shared communication networks may introduce reliability issues such as traffic rate limitations and intermittent interruptions to connectivity. These potential limitations can be mitigated by carrying out processing of the on demand images within close vicinity of the image source by using Mobile Edge Computing rather than a centralised cloud network as in previous embodiments.

Upon receipt of the on demand images from the image capturing resources 300, the detection unit 305 is configured to execute image processing as discussed previously and thereby identify the formation of black ice on a road surface image. Where the detection unit 305 determines that black ice is present on a road surface, the detection unit 305 sends a black ice alert 306 to the alert management unit 301. The black ice alert may, for example, be forwarded to external entities 307 for handling in an appropriate manner according to the situation.

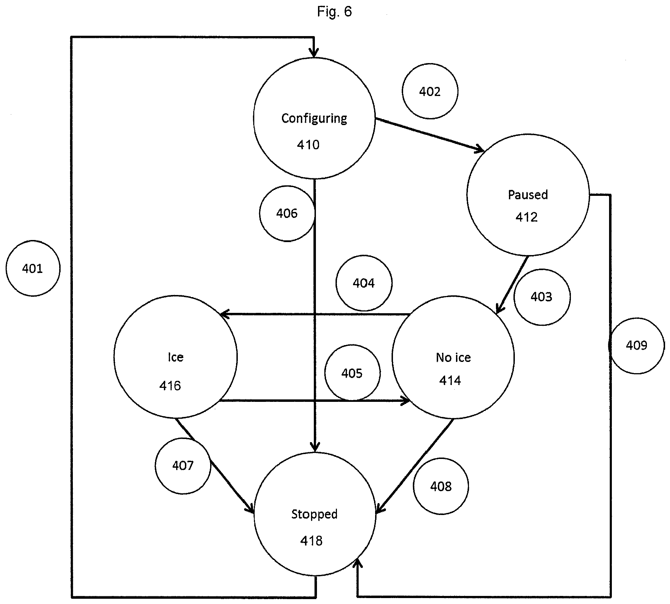

Figure 6 illustrates the states of the detection unit 16 of the black ice detection system 10 and the possible transitions between the states.

In the first step, 401, the detection state determining unit of the black ice detection system 10 determines whether the detection unit 16 should enter into the active detection state or the dormant state based on the road surface environment information received from the road surface environment monitoring unit. When the detection unit 16 enters the active detection state, the configuration state 410 of the detection unit 16 begins.

The configuration state 410 includes two sub-processes of configuration, the first of which includes selection of a suitable exemplar road surface texture value vector pair from the exemplar clear road surface texture value vectors and the exemplar black ice road surface texture value vectors, each exemplar road surface texture value pair having exemplar road surface texture value vectors derived from the same image condition groups. Wherein image condition groups are road surface images (both of clear road surfaces and black ice road surfaces) obtained under imaging conditions characterised in a particular way (i.e. particular light conditions, particular type of camera). The second sub-process of the detection unit 16 configuration state 410 uses the initialisation unit 22 to identify the presence or otherwise of road surfaces for each portion of the reference road surface image by comparing the reference texture value vector for each portion and the exemplar clear road surface texture value from the exemplar road surface texture value pair. Once the image portions showing road surface have been identified, the detection unit 16 proceeds to step 402 where the paused state 412 is entered and a message indicating that the detection unit 16 has completed the configuration phase 410 is sent to the road surface environment monitoring unit.

Upon receipt of a start message from the road surface environment monitoring unit, the detection unit 16 proceeds to step 403 and the no ice state 414 is entered. While the detection unit 16 is in the no ice state 414, each real time road surface image is processed to identify whether black ice is present on the physical road surface included in the real time road surface image by comparing the real time road surface texture value vector to exemplar road surface texture value vectors produced by inputting images of road surfaces on which black ice is formed to the convolutional neural network. If black ice is detected, the detection unit 16 generates a black ice alert and transmits the black ice alert to the alert management unit 18, and proceeds to step 404 where the ice state 416 is entered. In the ice state 416, the detection unit 16 continues to process each real time road surface image in order to identify whether black ice is present on the physical road surface included in the real time road surface image. If no black ice is detected by the detection unit 16 while in the ice state 416, the detection unit 16 may generate a no black ice alert and transmit the no black ice alert to the alert management unit 18, after which the detection unit 16 returns to the no ice state 414 in step 405. In each of the aforementioned states, a stop message may be issued by the initialisation unit 22, the image retrieving unit 12 or the detection unit 16 itself, which causes the detection unit 16 to move to the stopped state 418 via steps 406, 407, 408 and 409. While in the stopped state 418, no processing of real time road surface images is carried out by the detection unit 16, and therefore the detection unit 16 may be removed from the computing resources being used by the black ice detection system 10.

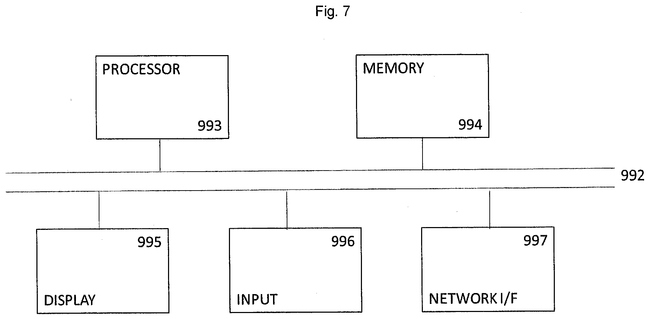

Figure 7 is a block diagram of a computing device, such as a black ice detection system, which embodies the present invention, and which may be used to implement a method of an embodiment of detecting the formation of black ice on a road surface. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of the image retrieving unit 12, the image capturing resources 14, the detection unit 16 and the alert management unit 18 described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

The image retrieving unit 12 of Figures 1 and 2 may be a processor 993 (or plurality thereof) executing processing instructions (a program) stored on a memory 994 and exchanging data via a network I/F 997. In particular, the processor 993 executes processing instructions to receive, via the network I/F, road surface images from image capturing resources 14. Furthermore, the processor 993 may execute processing instructions to store road surface images on a connected storage unit and/or to transmit, via the network I/F 997, road surface images to the detection unit 16 for processing.

The detection unit 16 of Figures 1 and 2 may be a processor 993 (or plurality thereof) executing processing instructions (a program) stored on a memory 994 and exchanging data via a network I/F 997. In particular, the processor 993 executes processing instructions to receive, via the network I/F, road surface images from the image retrieving unit 12 and executing image processing on the retrieved road surface image. Furthermore, the processor 993 may execute processing instructions to store road surface images on a connected storage unit and/or to transmit, via the network I/F 997, black ice alerts to the alert management unit 18 for processing.

The alert management unit 18 of Figures 1 and 2 may be a processor 993 (or plurality thereof) executing processing instructions (a program) stored on a memory 994 and exchanging data via a network I/F 997. In particular, the processor 993 executes processing instructions to receive, via the network I/F, black ice alerts from the detection unit 16 and transmit the black ice alerts to authorised users 20 of the black ice detection system. Furthermore, the processor 993 may execute processing instructions to store black ice alerts on a connected storage unit and/or to transmit, via the network I/F 997, black ice alerts to authorised users 20 for processing.

Methods embodying the present invention may be carried out on a computing device such as that illustrated in Figure 7. Such a computing device need not have every component illustrated in Figure 7, and may be composed of a subset of those components. A method embodying the present invention may be carried out by a single computing device in communication with one or more data storage servers via a network. The computing device may be a data storage device itself storing black ice alerts.

A method embodying the present invention may be carried out by a plurality of computing devices operating in cooperation with one another. One or more of the plurality of computing devices may be a data storage server storing at least a portion of the black ice alerts.

## Claims

1. A black ice detection system (10), configured to identify the presence of black ice on road surfaces based on image processing of road surface images; the black ice detection system (10) comprising:

   a memory;
   a processor coupled to the memory and the processor is configured to:

      retrieve a time series of road surface images from one or more image capturing resources (14), wherein

         the image capturing resources (14) are on demand image capturing infrastructure, connectable to the black ice detection system (10) over a network, that is arranged to image the road surface in response to a demand from the black ice detection system (10), and wherein the demand is automatically generated by the black ice detection system (10) in response to a road surface environment monitor receiving road surface environment information indicating that a likelihood of black ice formation is above a predefined threshold value, and
         each of the road surface images includes an image of a physical road surface;

      respond to the retrieval of each of the road surface images by executing image processing on the retrieved road surface image as a real time road surface image, the image processing comprising:

         transforming the image of the physical road surface in the real time road surface image into a real time road surface texture value vector using a convolutional neural network,
         identifying a likelihood of black ice being present on the physical road surface included in the real time road surface image being reached by comparing the real time road surface texture value vector to both: an exemplar black-ice-clear road surface texture value vector produced by the convolutional neural network based on one or more predetermined images of a road surface on which no black ice is formed; and an exemplar black ice road surface texture value vector produced by the convolutional neural network based on one or more predetermined images of a road surface on which black ice is formed, and when the comparison indicates a similarity threshold between the real-time road surface texture value vector and the exemplar black ice road surface texture value vector is satisfied, switching from a non-alert state to an alert state if, over a predetermined number of road surface images in the time series, the respective real time road surface texture value vectors exhibit increasing similarity to the exemplar black ice road surface texture value vector and decreasing similarity to the exemplar black-ice-clear road surface texture value vector;

      the processor being further configured to:
      respond to the switch to alert state by transmitting a black ice alert to alert recipients of the black ice detection system (10).

2. A black ice detection system (10) according to claim 1, wherein the image processing further comprises:

when the comparison indicates a similarity threshold between the real-time road surface texture value vector and the exemplar black ice road surface texture value vector is not satisfied, switching from an alert state to a non-alert state if, over a predetermined number of road surface images in the time series, the respective real time road surface texture value vectors exhibit decreasing similarity to the exemplar black ice road surface texture value vector and increasing similarity to the exemplar black-ice-clear road surface texture value vector.

3. A black ice detection system (10) according to claim 1, further comprising:

the road surface environment monitor configured to monitor environment conditions at the physical road surface imaged in a road surface image retrieved by the processor, specify road surface environment information, wherein the road surface environment information indicates when the physical road surface is susceptible to black ice formation, based on the monitored environment conditions, and
when the road surface environment information indicates that the physical road surface is susceptible to black ice formation, to issue a request to the processor;
the processor, in response to the request, being configured to retrieve a time series of images of the physical road surface from the image capturing resources (14).

4. A black ice detection system (10) according to claim 3, wherein
the road surface environment monitor further includes a weather forecast receiver configured to receive a time series of weather forecasts for a region covering the physical road surface imaged in the road surface image, and update the road surface environment information according to the most recently received weather forecast among the time series.

5. A black ice detection system (10) according to claim 3, wherein
the road surface environment monitor further includes a temperature sensor configured to generate temperature information for a region covering the physical road surface imaged in the time series of road surface images, and update the road surface environment information according to the most recently generated temperature information.

6. A black ice detection system (10) according to any of claims 1 to 5, the processor being configured to initialise for performing image processing on a time series of road surface images from particular image capturing resources (14) by:

transforming each of plural regions of a reference image from the particular image capturing resources (14) into a reference texture value vector using the convolutional neural network;
for a plurality of image condition groups, each containing images obtained under a particular imaging condition and comprising one or more images of a black-ice-clear road surface, and one or more images of a black ice road surface, determining an exemplar black-ice-clear road surface texture value vector by inputting the one or more images of the black-ice-clear road surface to the convolutional neural network, and determining an exemplar black ice road surface texture value vector by inputting the one or more images of the black ice road surface to the convolutional neural network, the determined texture value vectors being recorded as an exemplar road surface texture value pair for the respective image condition group;
wherein each of the image condition groups consists of images obtained under a particular imaging condition; wherein
for each of the portions of the reference road surface image, the presence or otherwise of road surfaces is identified by comparing the reference texture value vector for the portion and the exemplar black-ice-clear road surface texture value vector from the exemplar road surface texture value pair,
the portions of the reference road surface image for the particular image capturing resources (14) identified as having road surface present are recorded, and, during image processing of images from the particular image capturing resources (14), transforming the image of the physical road surface in the real time road surface image into a real time road surface texture value vector by referring to the recorded portions.

7. A black ice detection system (10) according to claim 6, wherein
in the image processing, the presence or absence of black ice is determined in an iterative process by:

determining a first correlation value by comparing the real time road surface texture value vector to the exemplar black ice road surface texture value vector from the exemplar road surface texture value pair;
determining a second correlation value by comparing the same real time road surface texture value vector as used in determining the first correlation value to the reference road surface texture value vector; and

determining first correlation values and second correlation values for a time series of real time road surface images retrieved by the processor from the same image capturing resources (14) and determining whether black ice is present based on whether the first correlation values and second correlation values increase or decrease over the time series of real time road surface images.

8. A black ice detection system (10) according to any of claims 1, 2, 3 or 6, the processor being further configured to: receive road surface environment information from the road surface environment monitor, and to determine whether an active detection state or a dormant state is entered based on the road surface environment information, wherein the active detection state determines the presence or absence of black ice on road surfaces, and wherein power consumption of the system is reduced in the dormant state compared with the active detection state.

9. A black ice detection system (10) according to any of claims 1 to 8, wherein the processor is further configured to transmit the black ice alerts as messages to roadside displays, text messages to registered users (20) and as overlays to travel routing applications.

10. A roadside warning system comprising the black ice detection system (10) according to claims 1 to 9 and a roadside display configured to receive black ice alerts from the processor, wherein the roadside display is located at the side of the physical road surface in such a manner as to display the black ice alerts received from the processor to drivers using the physical road surface.

11. A black ice detection method, for identifying the presence of black ice on road surfaces based on image processing of road surface images; the black ice detection method comprising:

retrieving a time series of road surface images from one or more image capturing resources (14), wherein

the image capturing resources (14) are on demand image capturing infrastructure, connectable to a black ice detection system (10) according to claim 1 over a network, that is arranged to image the road surface in response to a demand from the black ice detection system (10), and wherein the demand is automatically generated by the black ice detection system (10) in response to a road surface environment monitor receiving road surface environment information indicating that a likelihood of black ice formation is above a predefined threshold value, and each of the road surface images includes an image of a physical road surface;

responding to the retrieval of each of the road surface images by executing image processing on the retrieved road surface image as a real time road surface image, the image processing comprising:

transforming the image of the physical road surface in the real time road surface image into a real time road surface texture value vector using a convolutional neural network; identifying a likelihood of black ice being present on the physical road surface included in the real time road surface image being reached by comparing the real time road surface texture value vector to both: an exemplar black-ice-clear road surface texture value vector produced by a convolutional neural network based on one or more predetermined images of a road surface on which no black ice is formed; and an

exemplar black ice road surface texture value vector produced by the convolutional neural network based on one or more images of a road surface on which black ice is formed, and when the comparison indicates a similarity threshold between the real-time road surface texture value vector and the exemplar black ice road surface texture value vector is satisfied, switching from a non-alert state to an alert state if, over a predetermined number of road surface images in the time series, the respective real time road surface texture value vectors exhibit increasing similarity to the exemplar black ice road surface texture value vector and decreasing similarity to the exemplar black-ice-clear road surface texture value vector; the method further comprising: responding to the switch to alert state by transmitting black ice alerts to alert recipients of the black ice detection system (10).

12. A computer program which, when executed by a computer device, causes the computing device to execute the method according to claim 11.

13. A computer readable medium storing the computer program of claim 12.

**Patentansprüche**

1. Schwarzeisdetektionssystem (10), das dazu konfiguriert ist, das Vorhandensein von Schwarzeis auf Straßenoberflächen basierend auf einer Bildverarbeitung von Straßenoberflächenbildern zu ermitteln; wobei das Schwarzeisdetektionssystem (10) Folgendes umfasst:

   einen Speicher;
   einen Prozessor, der mit dem Speicher gekoppelt ist, und der Prozessor konfiguriert ist zum:

      Abrufen einer Zeitreihe von Straßenoberflächenbildern von einer oder mehreren Bilderfassungsressourcen (14), wobei die Bilderfassungsressourcen (14) eine On-Demand-Bilderfassungsinfrastruktur sind, die über ein Netzwerk mit dem Schwarzeisdetektionssystem (10) verbindbar ist, das dazu eingerichtet ist, die Straßenoberfläche als Reaktion auf eine Anforderung des Schwarzeisdetektionssystems (10) abzubilden, und wobei die Anforderung automatisch durch das Schwarzeisdetektionssystem (10) als Reaktion darauf generiert wird, dass eine Straßenoberflächenumgebungsüberwachung Straßenoberflächenumgebungsinformationen empfängt, die angeben, dass eine Wahrscheinlichkeit einer Schwarzeisbildung über einem vordefinierten Schwellenwert liegt, und
      jedes der Straßenoberflächenbilder ein Bild einer physischen Straßenoberfläche beinhaltet;
      Reagieren auf den Abruf jedes der Straßenoberflächenbilder durch Ausführen einer Bildverarbeitung an dem abgerufenen Straßenoberflächenbild als Echtzeit-Straßenoberflächenbild, wobei die Bildverarbeitung Folgendes umfasst:

         Transformieren des Bildes der physischen Straßenoberfläche in dem Echtzeit-Straßenoberflächenbild in einen Echtzeit-Straßenoberflächentextur-Wertevektor unter Verwendung eines neuronalen Faltungsnetzwerks,
         Ermitteln einer Wahrscheinlichkeit, dass Schwarzeis auf der physischen Straßenoberfläche, die in dem erhaltenen Echtzeit-Straßenoberflächenbild enthalten ist, vorhanden ist, durch Vergleichen des Echtzeit-Straßenoberflächentextur-Wertevektors mit beiden von Folgendem: einem beispielhaften Textur-Wertevektor für schwarzeisfreie Straßenoberflächen, der von dem neuronalen Faltungsnetzwerk basierend auf einem oder mehreren vorgegebenen Bildern einer Straßenoberfläche, auf der sich kein Schwarzeis gebildet hat, erstellt wird; und einem beispielhaften Textur-Wertevektor für schwarzeisbedeckte Straßenoberflächen, der von dem neuronalen Faltungsnetzwerk basierend auf einem oder mehreren vorgegebenen Bildern einer Straßenoberfläche, auf der sich Schwarzeis gebildet hat, erstellt wird, und
         wenn der Vergleich angibt, dass ein Ähnlichkeitsschwellenwert zwischen dem Echtzeit-Straßenoberflächentextur-Wertevektor und dem beispielhaften Textur-Wertevektor für schwarzeisbedeckte Straßenoberflächen erreicht ist, Umschalten von einem Nicht-Alarmzustand in einen Alarmzustand, wenn über eine vorgegebene Anzahl von Straßenoberflächenbildern in der Zeitreihe die jeweiligen Echtzeit-Straßenoberflächentextur-Wertevektoren eine zunehmende Ähnlichkeit mit dem beispielhaften Textur-Wertevektor für schwarzeisbedeckte Straßenoberflächen und eine abnehmende Ähnlichkeit mit dem beispielhaften Textur-Wertevektor für schwarzeisfreie Straßenoberflächen aufweisen; wobei der Prozessor ferner konfiguriert ist zum:
         Reagieren auf das Umschalten in den Alarmzustand durch Ausgeben einer Schwarzeiswarnmeldung an die Warnmeldungsempfänger des Schwarzeisdetektionssystems (10).

2. Schwarzeisdetektionssystem (10) nach Anspruch 1, wobei die Bildverarbeitung ferner Folgendes umfasst:
   wenn der Vergleich angibt, dass ein Ähnlichkeitsschwellenwert zwischen dem Echtzeit-Straßenoberflächentextur-Wertevektor und dem beispielhaften Textur-Wertevektor für schwarzeisbedeckte Straßenoberflächen nicht erreicht ist, Umschalten von einem Alarmzustand in einen Nicht-Alarmzustand, wenn über eine vorgegebene Anzahl von Straßenoberflächenbildern in der Zeitreihe die jeweiligen Echtzeit-Straßenoberflächentextur-Wertevektoren eine abnehmende Ähnlichkeit mit dem beispielhaften Textur-Wertevektor für schwarzeisbedeckte Straßenoberflächen und eine zunehmende Ähnlichkeit mit dem beispielhaften Textur-Wertevektor für schwarzeifreie Straßenoberflächen aufweisen.

3. Schwarzeisdetektionssystem (10) nach Anspruch 1, ferner umfassend:

   die Straßenoberflächenumgebungsüberwachung, die dazu konfiguriert ist, Umgebungsbedingungen an der physischen Straßenoberfläche zu überwachen, die auf einem von dem Prozessor abgerufenen Straßenoberflächenbild abgebildet sind, Informationen zur Straßenoberflächenumgebung zu spezifizieren, wobei die Straßenoberflächenumgebungsinformationen basierend auf den überwachten Umgebungsbedingungen angeben, wann die physische Straßenoberfläche anfällig für Schwarzeisbildung ist, und

wenn die Straßenoberflächenumgebungsinformationen angeben, dass die physische Straßenoberfläche anfällig für Schwarzeisbildung ist, Stellen einer Anforderung an den Prozessor;

wobei der Prozessor als Reaktion auf die Anforderung dazu konfiguriert ist, eine Zeitreihe von Bildern der physischen Straßenoberfläche von den Bilderfassungsressourcen (14) abzurufen.

4. Schwarzeisdetektionssystem (10) nach Anspruch 3, wobei
die Straßenoberflächenumgebungsüberwachung ferner einen Wettervorhersageempfänger beinhaltet, der dazu konfiguriert ist, eine Zeitreihe von Wettervorhersagen für einen Bereich zu empfangen, der die in dem Straßenoberflächenbild abgebildete physische Straßenoberfläche abdeckt, und die Straßenoberflächenumgebungsinformationen entsprechend der zuletzt empfangenen Wettervorhersage in der Zeitreihe zu aktualisieren.

5. Schwarzeisdetektionssystem (10) nach Anspruch 3, wobei
die Straßenoberflächenumgebungsüberwachung ferner einen Temperatursensor beinhaltet, der dazu konfiguriert ist, Temperaturinformationen für einen Bereich zu generieren, der die in der Zeitreihe von Straßenoberflächenbildern abgebildete physische Straßenoberfläche abdeckt, und die Straßenoberflächenumgebungsinformationen entsprechend den zuletzt generierten Temperaturinformationen zu aktualisieren.

6. Schwarzeisdetektionssystem (10) nach einem der Ansprüche 1 bis 5, wobei der Prozessor dazu konfiguriert ist, zum Durchführen einer Bildverarbeitung an einer Zeitreihe von Straßenoberflächenbildern aus bestimmten Bilderfassungsressourcen (14) zu initialisieren durch:

Transformieren jedes von mehreren Bereichen eines Referenzbildes aus den bestimmten Bilderfassungsressourcen (14) in einen Referenz-Textur-Wertevektor unter Verwendung des neuronalen Faltungsnetzwerks;

für eine Vielzahl von Bildbedingungsgruppen, die jeweils Bilder enthalten, die unter einer bestimmten Abbildungsbedingung erhalten wurden, und ein oder mehrere Bilder einer schwarzeisfreien Straßenoberfläche und ein oder mehrere Bilder einer schwarzeisbedeckten Straßenoberfläche umfassen, Bestimmen eines beispielhaften Textur-Wertevektors für schwarzeisfreie Straßenoberflächen durch Eingeben des einen oder der mehreren Bilder der schwarzeisfreien Straßenoberfläche in das neuronale Faltungsnetzwerk und Bestimmen eines beispielhaften Textur-Wertevektors für schwarzeisbedeckte Straßenoberflächen durch Eingeben des einen oder der mehreren Bilder der schwarzeisbedeckten Straßenoberfläche in das neuronale Faltungsnetzwerk, wobei die bestimmten Textur-Wertevektoren als beispielhaftes Straßenoberflächentextur-Wertepaar für die jeweilige Bildbedingungsgruppe aufgezeichnet werden;

wobei jede der Bildbedingungsgruppen aus Bildern besteht, die unter einer bestimmten Abbildungsbedingung erhalten wurden wobei für jeden der Abschnitte des Referenz-Straßenoberflächenbildes das Vorhandensein oder Nichtvorhandensein von Straßenoberflächen durch Vergleichen des Referenz-Textur-Wertevektors für den Abschnitt mit dem beispielhaften Textur-Wertevektor für schwarzeisfreie Straßenoberflächen von dem beispielhaften Straßenoberflächentextur-Wertepaar ermittelt wird,

wobei die Abschnitte des Referenz-Straßenoberflächenbildes für die bestimmten Bilderfassungsressourcen (14), bei denen ermittelt wurde, dass eine Straßenoberfläche vorhanden ist, aufgezeichnet werden, und während der Bildverarbeitung von Bildern von den bestimmten Bilderfassungsressourcen (14) Transformieren des Bildes der physischen Straßenoberfläche in dem Echtzeit-Straßenoberflächenbild in einen Echtzeit-Straßenoberflächentextur-Wertevektor, indem auf die aufgezeichneten Abschnitte Bezug genommen wird.

7. Schwarzeisdetektionssystem (10) nach Anspruch 6, wobei
bei der Bildverarbeitung das Vorhandensein oder Nichtvorhandensein von Schwarzeis in einem iterativen Prozess bestimmt wird durch:

Bestimmen eines ersten Korrelationswerts durch Vergleichen des Echtzeit-Straßenoberflächentextur-Wertevektors mit dem beispielhaften Textur-Wertevektor für schwarzeisbedeckte Straßenoberflächen aus dem beispielhaften Straßenoberflächentextur-Wertepaar;

Bestimmen eines zweiten Korrelationswerts durch Vergleichen desselben Echtzeit-Straßenoberflächentextur-Wertevektors, der beim Bestimmen des ersten Korrelationswerts verwendet wurde, mit dem Referenz-Straßenoberflächentextur-Wertevektor; und

Bestimmen erster Korrelationswerte und zweiter Korrelationswerte für eine Zeitreihe von Echtzeit-Straßenoberflächenbildern, die von dem Prozessor aus denselben Bilderfassungsressourcen (14) abgerufen wurden, und Bestimmen, ob Schwarzeis vorhanden ist, basierend darauf, ob die ersten Korrelationswerte und die zweiten Korrelationswerte über die Zeitreihe von Echtzeit-Straßenoberflächenbildern zunehmen oder abnehmen.

8. Schwarzeisdetektionssystem (10) nach einem der Ansprüche 1, 2, 3 oder 6, wobei der Prozessor ferner konfiguriert ist zum:
Empfangen von Straßenoberflächenumgebungsinformationen von der Straßenoberflächenumgebungsüberwachung und Bestimmen, basierend auf den Straßenoberflächenumgebungsinformationen, ob in einen aktiven Detektionszustand oder einen Ruhezustand eingetreten wird, wobei der aktive Detektionszustand das Vorhandensein oder Nichtvorhandensein von Schwarzeis auf Straßenoberflächen bestimmt und wobei der Stromverbrauch des Systems im Ruhezustand im Vergleich zum aktiven Detektionszustand reduziert ist.

9. Schwarzeisdetektionssystem (10) nach einem der Ansprüche 1 bis 8, wobei
der Prozessor ferner dazu konfiguriert ist, die Schwarzeiswarnmeldungen als Nachrichten an Hinweisschilder am Straßenrand, Textnachrichten an registrierte Benutzer (20) und als Overlays für Reisebeschreibungs-Anwendungen zu übertragen.

10. Straßenrandwarnsystem, umfassend das Schwarzeisdetektionssystem (10) nach den Ansprüchen 1 bis 9 und eine Straßenrandanzeige, die dazu konfiguriert ist, Schwarzeiswarnmeldungen von dem Prozessor zu empfangen, wobei sich die Straßenrandanzeige an der Seite der physischen Straßenoberfläche befindet, derart, dass die von dem Prozessor empfangenen Schwarzeiswarnmeldungen den Fahrern angezeigt werden, die die physische Straßenoberfläche verwenden.

11. Schwarzeisdetektionsverfahren zum Ermitteln des Vorhandenseins von Schwarzeis auf Straßenoberflächen basierend auf einer Bildverarbeitung von Straßenoberflächenbildern; wobei das Schwarzeisdetektionsverfahren Folgendes umfasst:

Abrufen einer Zeitreihe von Straßenoberflächenbildern von einer oder mehreren Bilderfassungsressourcen (14), wobei
die Bilderfassungsressourcen (14) eine On-Demand-Bilderfassungsinfrastruktur sind, die über ein Netzwerk mit einem Schwarzeisdetektionssystem (10) nach Anspruch 1 verbindbar ist, das
dazu eingerichtet ist, die Straßenoberfläche als Reaktion auf eine Anforderung des Schwarzeisdetektionssystems (10) abzubilden, und wobei die Anforderung automatisch durch das Schwarzeisdetektionssystem (10) als Reaktion darauf generiert wird, dass eine Straßenoberflächenumgebungsüberwachung Straßenoberflächenumgebungsinformationen empfängt, die angeben, dass eine Wahrscheinlichkeit einer Schwarzeisbildung über einem vordefinierten Schwellenwert liegt, und
jedes der Straßenoberflächenbilder ein Bild einer physischen Straßenoberfläche beinhaltet;
Reagieren auf den Abruf jedes der Straßenoberflächenbilder durch Ausführen einer Bildverarbeitung an dem abgerufenen Straßenoberflächenbild als Echtzeit-Straßenoberflächenbild, wobei die Bildverarbeitung Folgendes umfasst:

Transformieren des Bildes der physischen Straßenoberfläche in dem Echtzeit-Straßenoberflächenbild in einen Echtzeit-Straßenoberflächentextur-Wertevektor unter Verwendung eines neuronalen Faltungsnetzwerks;
Ermitteln einer Wahrscheinlichkeit, dass Schwarzeis auf der physischen Straßenoberfläche vorhanden ist, die in dem erhaltenen Echtzeit-Straßenoberflächenbild enthalten ist, durch Vergleichen des Echtzeit-Straßenoberflächentextur-Wertevektors mit beiden von Folgendem: einem beispielhaften Textur-Wertevektor für schwarzeisfreie Straßenoberflächen, der von dem neuronalen Faltungsnetzwerk basierend auf einem oder mehreren vorgegebenen Bildern einer Straßenoberfläche, auf der sich kein Schwarzeis gebildet hat, erstellt wird; und einem beispielhaften Textur-Wertevektor für schwarzeisbedeckte Straßenoberflächen, der von dem neuronalen Faltungsnetzwerk basierend auf einem oder mehreren Bildern einer Straßenoberfläche, auf der sich Schwarzeis gebildet hat, erstellt wird, und
wenn der Vergleich angibt, dass ein Ähnlichkeitsschwellenwert zwischen dem Echtzeit-Straßenoberflächentextur-Wertevektor und dem beispielhaften Textur-Wertevektor für schwarzeisbedeckte Straßenoberflächen erreicht ist, Umschalten von einem Nicht-Alarmzustand in einen Alarmzustand, wenn über eine vorgegebene Anzahl von Straßenoberflächenbildern in der Zeitreihe die jeweiligen Echtzeit-Straßenoberflächentextur-Wertevektoren eine zunehmende Ähnlichkeit mit dem beispielhaften Textur-Wertevektor für schwarzeisbedeckte Straßenoberflächen und eine abnehmende Ähnlichkeit mit dem beispielhaften Textur-Wertevektor für schwarzeisfreie Straßenoberflächen aufweisen;

wobei das Verfahren ferner umfasst:

Reagieren auf das Umschalten in den Alarmzustand durch Ausgeben einer Schwarzeiswarnmeldung an die Warnmeldungsempfänger des Schwarzeisdetektionssystems (10).

12. Computerprogramm, das, wenn es von einer Computervorrichtung ausgeführt wird, die Computervorrichtung dazu veranlasst, das Verfahren nach Anspruch 11 auszuführen.

13. Computerlesbares Medium, welches das Computerprogramm nach Anspruch 12 speichert.

**Revendications**

1. Système de détection de glace noire (10), configuré pour identifier la présence de glace noire sur des surfaces routières sur la base d'un traitement d'image d'images de surface routière ; le système de détection de glace noire (10) comprenant :

une mémoire ;
un processeur couplé à la mémoire et le processeur est configuré pour :

récupérer une série temporelle d'images de surface routière à partir d'une ou de plusieurs ressources de capture d'images (14), dans lequel
les ressources de capture d'image (14) sont une infrastructure de capture d'image à la demande, pouvant être connectée au système de détection de glace noire (10) sur un réseau, qui est agencée pour imager la surface routière en réponse à une demande du système de détection de glace noire (10), et dans lequel la demande est automatiquement générée par le système de détection de glace noire (10) en réponse à un moniteur d'environnement de surface routière recevant des informations d'environnement de surface routière indiquant qu'une probabilité de formation de glace noire est supérieure à une valeur seuil prédéfinie, et chacune des images de surface routière comporte une image d'une surface routière physique ;
répondre à la récupération de chacune des images de surface routière en exécutant un traitement d'image sur l'image de surface routière récupérée en tant qu'image de surface routière en temps réel, le traitement d'image comprenant :

la transformation de l'image de la surface routière physique dans l'image de surface routière en temps réel en un vecteur de valeur de texture de surface routière en temps réel à l'aide d'un réseau neuronal convolutif,
l'identification d'une probabilité que de la glace noire soit présente sur la surface routière physique incluse dans l'image de surface routière en temps réel étant atteinte en comparant le vecteur de valeur de texture de surface routière en temps réel à la fois : à un exemple de vecteur de valeur de texture de surface routière de glace noire-claire produit par le réseau neuronal convolutif sur la base d'une ou de plusieurs images prédéterminées d'une surface routière sur laquelle aucune glace noire n'est formée ; et à un exemple de vecteur de valeur de texture de surface routière de glace noire produit par le réseau neuronal convolutif sur la base d'une ou de plusieurs images prédéterminées d'une surface routière sur laquelle la glace noire est formée, et
lorsque la comparaison indique qu'un seuil de similarité entre le vecteur de valeur de texture de surface routière en temps réel et l'exemple de vecteur de valeur de texture de surface routière de glace noire est satisfait, le passage d'un état de non-alerte à un état d'alerte si, sur un nombre prédéterminé d'images de surface routière dans la série temporelle, les vecteurs de valeur de texture de surface routière en temps réel respectifs présentent une similarité croissante avec l'exemple de vecteur de valeur de texture de surface routière de glace noire et une similarité décroissante avec l'exemple de vecteur de valeur de texture de surface routière de glace noire-claire ;
le processeur étant en outre configuré pour :
répondre au passage à l'état d'alerte en transmettant une alerte de glace noire pour alerter les destinataires du système de détection de glace noire (10).

2. Système de détection de glace noire (10) selon la revendication 1, dans lequel le traitement d'image comprend en outre :
lorsque la comparaison indique qu'un seuil de similarité entre le vecteur de valeur de texture de surface routière en temps réel et l'exemple de vecteur de valeur de texture de surface routière de glace noire n'est pas satisfait, le passage d'un état d'alerte à un état de non-alerte si, sur un nombre prédéterminé d'images de surface routière dans la série temporelle, les vecteurs de valeur de texture de surface routière en temps réel respectifs présentent une similarité décroissante avec l'exemple de vecteur de valeur de texture de surface routière de glace noire et une similarité croissante avec l'exemple de vecteur de valeur de texture de surface routière de glace noire-claire.

**3.** Système de détection de glace noire (10) selon la revendication 1, comprenant en outre :

le moniteur d'environnement de surface routière configuré pour surveiller des conditions d'environnement au niveau de la surface routière physique imagée dans une image de surface routière récupérée par le processeur, spécifier des informations d'environnement de surface routière, dans lequel les informations d'environnement de surface routière indiquent quand la surface routière physique est susceptible de former de la glace noire, sur la base des conditions d'environnement surveillées, et

lorsque les informations d'environnement de surface routière indiquent que la surface routière physique est susceptible de former de la glace noire, émettre une demande au processeur ; le processeur, en réponse à la demande, étant configuré pour récupérer une série temporelle d'images de la surface routière physique à partir des ressources de capture d'images (14).

**4.** Système de détection de glace noire (10) selon la revendication 3, dans lequel
le moniteur d'environnement de surface routière comporte en outre un récepteur de prévisions météorologiques configuré pour recevoir une série temporelle de prévisions météorologiques pour une région couvrant la surface routière physique imagée dans l'image de surface routière, et mettre à jour les informations d'environnement de surface routière selon les prévisions météorologiques les plus récemment reçues parmi les séries temporelles.

**5.** Système de détection de glace noire (10) selon la revendication 3, dans lequel
le moniteur d'environnement de surface routière comporte en outre un capteur de température configuré pour générer des informations de température pour une région couvrant la surface routière physique imagée dans la série temporelle d'images de surface routière, et mettre à jour les informations d'environnement de surface routière selon les informations de température les plus récemment générées.

**6.** Système de détection de glace noire (10) selon l'une quelconque des revendications 1 à 5, le processeur étant configuré pour s'initialiser pour exécuter un traitement d'image sur une série temporelle d'images de surface routière à partir de ressources de capture d'images particulières (14) :

en transformant chacune de plusieurs régions d'une image de référence à partir des ressources de capture d'images particulières (14) en un vecteur de valeur de texture de référence à l'aide du réseau neuronal convolutif ;
pour une pluralité de groupes de conditions d'image, chacun contenant des images obtenues dans une condition d'imagerie particulière et comprenant une ou plusieurs images d'une surface routière de glace noire-claire, et une ou plusieurs images d'une surface routière de glace noire, en déterminant un exemple de vecteur de valeur de texture de surface routière de glace noire-claire en entrant les une ou plusieurs images de la surface routière de glace noire-claire dans le réseau neuronal convolutif, et en déterminant un exemple de vecteur de valeur de texture de surface routière de glace noire en entrant les une ou plusieurs images de la surface routière de glace noire dans le réseau neuronal convolutif, les vecteurs de valeur de texture déterminés étant enregistrés en tant qu'exemple de paire de valeurs de texture de surface routière pour le groupe de conditions d'image respectif ;
dans lequel chacun des groupes de conditions d'image est constitué d'images obtenues dans une condition d'imagerie particulière ; dans lequel
pour chacune des parties de l'image de surface routière de référence, la présence ou non de surfaces routières est identifiée en comparant le vecteur de valeur de texture de référence pour la partie et l'exemple de vecteur de valeur de texture de surface routière de glace noire-claire à partir de l'exemple de paire de valeurs de texture de surface routière, les parties de l'image de surface routière de référence pour les ressources de capture d'images particulières (14) identifiées comme ayant une surface routière présente sont enregistrées, et, pendant le traitement d'image des images provenant des ressources de capture d'images particulières (14), en transformant l'image de la surface routière physique dans l'image de surface routière en temps réel en un vecteur de valeur de texture de surface routière en temps réel en se référant aux parties enregistrées.

**7.** Système de détection de glace noire (10) selon la revendication 6, dans lequel
dans le traitement d'image, la présence ou l'absence de glace noire est déterminée dans un processus itératif :

par la détermination d'une première valeur de corrélation en comparant le vecteur de valeur de texture de surface routière en temps réel à l'exemple de vecteur de valeur de texture de surface routière de glace noire à partir de l'exemple de paire de valeurs de texture de surface routière ;

par la détermination d'une seconde valeur de corrélation en comparant le même vecteur de valeur de texture de surface routière en temps réel que celui utilisé pour déterminer la première valeur de corrélation au vecteur de valeur de texture de surface routière de référence ; et

par la détermination de premières valeurs de corrélation et de secondes valeurs de corrélation pour une série temporelle d'images de surface routière en temps réel récupérées par le processeur à partir des mêmes ressources de capture d'images (14) et le fait de déterminer si de la glace noire est présente sur la base du fait que les premières valeurs de corrélation et les secondes valeurs de corrélation augmentent ou diminuent sur la série temporelle d'images de surface routière en temps réel.

8. Système de détection de glace noire (10) selon l'une quelconque des revendications 1, 2, 3 ou 6, le processeur étant en outre configuré pour :

recevoir des informations d'environnement de surface routière à partir du moniteur d'environnement de surface routière, et pour déterminer si un état de détection actif ou un état dormant est entré sur la base des informations d'environnement de surface routière, dans lequel l'état de détection actif détermine la présence ou l'absence de glace noire sur des surfaces routière, et dans lequel la consommation d'énergie du système est réduite dans l'état dormant par rapport à l'état de détection actif.

9. Système de détection de glace noire (10) selon l'une quelconque des revendications 1 à 8, dans lequel le processeur est en outre configuré pour transmettre les alertes de glace noire sous forme de messages à des affichages de bord de route, de messages textuels à des utilisateurs enregistrés (20) et sous forme de superpositions à des applications d'itinéraire de voyage.

10. Système d'avertissement de bord de route comprenant le système de détection de glace noire (10) selon les revendications 1 à 9 et un affichage de bord de route configuré pour recevoir des alertes de glace noire du processeur, dans lequel l'affichage de bord de route est situé sur le côté de la surface routière physique de manière à afficher les alertes de glace noire reçues du processeur aux conducteurs utilisant la surface routière physique.

11. Procédé de détection de glace noire, pour identifier la présence de glace noire sur des surfaces routières sur la base d'un traitement d'image d'images de surface routière ; le procédé de détection de glace noire comprenant :

la récupération d'une série temporelle d'images de surface routière à partir d'une ou de plusieurs ressources de capture d'images (14), dans lequel

les ressources de capture d'images (14) sont une infrastructure de capture d'images à la demande, pouvant être connectée à un système de détection de glace noire (10) selon la revendication 1 sur un réseau, qui est agencée pour imager la surface routière en réponse à une demande du système de détection de glace noire (10), et dans lequel la demande est automatiquement générée par le système de détection de glace noire (10) en réponse à un moniteur d'environnement de surface routière recevant des informations d'environnement de surface routière indiquant qu'une probabilité de formation de glace noire est supérieure à une valeur seuil prédéfinie, et

chacune des images de surface routière comporte une image d'une surface routière physique ;

la réponse à la récupération de chacune des images de surface routière en exécutant un traitement d'image sur l'image de surface routière récupérée en tant qu'image de surface routière en temps réel, le traitement d'image comprenant :

la transformation de l'image de la surface routière physique dans l'image de surface routière en temps réel en un vecteur de valeur de texture de surface routière en temps réel à l'aide d'un réseau neuronal convolutif,

l'identification d'une probabilité que de la glace noire soit présente sur la surface routière physique incluse dans l'image de surface routière en temps réel étant atteinte en comparant le vecteur de valeur de texture de surface routière en temps réel à la fois : à un exemple de vecteur de valeur de texture de surface routière de glace noire-claire produit par le réseau neuronal convolutif sur la base d'une ou de plusieurs images prédéterminées d'une surface routière sur laquelle aucune glace noire n'est formée ; et à un exemple de vecteur de valeur de texture de surface routière de glace noire produit par le réseau neuronal convolutif sur la base d'une ou de plusieurs images prédéterminées d'une surface routière sur laquelle la glace noire est formée, et

lorsque la comparaison indique qu'un seuil de similarité entre le vecteur de valeur de texture de surface routière en temps réel et l'exemple de vecteur de valeur de texture de surface routière de glace noire est satisfait, le passage d'un état de non-alerte à un état d'alerte si, sur un nombre prédéterminé d'images de surface routière dans la série temporelle, les vecteurs de valeur de texture de surface routière en temps réel respectifs présentent une similarité croissante avec l'exemple de vecteur de valeur de texture de surface routière de glace noire et une similarité décroissante avec l'exemple de vecteur de valeur de texture de surface routière de glace noire-claire ; le procédé comprenant en outre :

la réponse au passage à l'état d'alerte en transmettant des alertes de glace noire pour alerter les destinataires du système de détection de glace noire (10).

12. Programme informatique qui, lorsqu'il est exécuté par un dispositif informatique, amène le dispositif informatique à exécuter le procédé selon la revendication 11.

13. Support lisible par ordinateur stockant le programme informatique selon la revendication 12.

Fig. 1

IMAGE CAPTURING RESOURCES

IMAGE RETRIEVING UNIT

DETECTION UNIT

ALERT MANAGEMENT UNIT

AUTHORISED USERS

Fig. 2

IMAGE CAPTURING RESOURCES

IMAGE RETRIEVING UNIT

INITIALISATION UNIT

DETECTION UNIT

ALERT MANAGEMENT UNIT

AUTHORISED USERS

Fig. 3

100

Image Capturing
Resources

102

101

Monitoring
station

Fig. 4

200

Image Capturing
Resources

203

Image
Sampling Unit

202

201

Alert
Management
Unit

207

204

208

Road Surface
Environment
Monitoring Unit

Detection Unit

205

206

Fig. 5

300

Image Capturing
Resources

301

Alert
Management Unit

307

309

310

306

308

Road Surface
Environment
Monitoring Unit

Detection Unit

305

Fig. 6

Fig. 7

| PROCESSOR | | MEMORY | |
|---|---|---|---|
| | 993 | | 994 |

992

| | 995 | | 996 | | 997 |
|---|---|---|---|---|---|
| DISPLAY | | INPUT | | NETWORK I/F | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015034844 A1
- US 2014062725 A1, MASTON ROBERT A